Europäisches Patentamt

European Patent Office

Office européen des brevets

(11) Veröffentlichungsnummer: **0 232 491 B1**

(12) **EUROPÄISCHE PATENTSCHRIFT**

(45) Veröffentlichungstag der Patentschrift: **03.07.91**

(51) Int. Cl.⁵: **C10G 1/06**

(21) Anmeldenummer: **86116589.2**

(22) Anmeldetag: **28.11.86**

Die Akte enthält technische Angaben, die nach dem Eingang der Anmeldung eingereicht wurden und die nicht in dieser Patentschrift enthalten sind.

(54) **Verbessertes Verfahren zur hydrierenden Behandlung von Kohle/Mineralöl-Gemischen.**

(30) Priorität: **06.12.85 DE 3543240**

(43) Veröffentlichungstag der Anmeldung:
**19.08.87 Patentblatt 87/34**

(45) Bekanntmachung des Hinweises auf die Patenterteilung:
**03.07.91 Patentblatt 91/27**

(84) Benannte Vertragsstaaten:
**BE DE FR GB LU NL**

(56) Entgegenhaltungen:
**US-A- 4 325 800**
**US-A- 4 486 293**

(73) Patentinhaber: **RHEINBRAUN Aktiengesellschaft**
**Stüttgenweg 2**
**W-5000 Köln 41(DE)**

(72) Erfinder: **Giehr, Axel, Dr. Dipl.-Chem.**
**Zeisigweg. 1**
**W-5047 Wesseling(DE)**
Erfinder: **Hammer, Hartmut, Dr. Dipl.-Chem.**
**Leyboldstrasse 21**
**W-5000 Köln 51(DE)**
Erfinder: **Wawrzinek, Joachim**
**Thorrer Strasse 60**
**W-5010 Bergheim 3(DE)**
Erfinder: **Scharf, Hans-Joachim, Dr.-Ing. Dipl.-Ing.**
**Margaretenstrasse 2**
**W-5040 Brühl(DE)**
Erfinder: **Lenz, Uwe, Dr. rer. nat. Dipl.-Chem.**
**Heideweg 7**
**W-5020 Frechen(DE)**

(74) Vertreter: **Koepsell, Helmut, Dipl.-Ing.**
**Mittelstrasse 7**
**W-5000 Köln 1(DE)**

**Beschreibung**

Die Erfindung betrifft ein Verfahren zur katalystischen hydrierende Behandlung von Gemischen, die Kohle und mineralische Öle und/oder Mineralölrückstände enthalten, in Gegenwart von Wasserstoff und/oder Wasserstoff enthaltenden Gasgemischen und/oder Wasserstoff übertragenden Verbindungen bei einer Temperatur von 400 - 520° C, vorzugsweise von 430 - 500° C und einem Druck von 100 - 700 bar, vorzugsweise von 150 - 450 bar, wobei in Gegenwart von Eisen, Eisen enthaltenden Verbindungen, Eisen und/oder Eisenverbindungen enthaltenden Materialien, Herdofenkoks, HTW-Stäuben bzw. -aschen (Hoch-Temperatur-Winkler-Staub), HKV-Stäuben bzw. -aschen (hydrierende Kohleveragasung), Aktivkohlen, die dotiert sind mit wenigstens einem hydrieraktiven Metall und/oder dessen Verbindungen gearbeitet wird und Herdofenkoks, HTW-Stäube bzw. HKV-Stäube ebenfalls dotiert sein können mit wenigstens einem hydrieraktiven Metall und/oder dessen Verbindungen oder von Gemischen von wenigstens zwei der genannten Bestandteile.

Die gemeinsame Hydrierung von Kohle und Mineralölen, insbesondere schweren Mineralölen und Rückstandsölen, ist bekannt. So wird in DE-B-2 444 827 ein Verfahren beschrieben, bei welchem das zu hydrierende Gemisch aus Kohle und Öl einer hydrierende Vorbehandlung unterworfen wird, um in der eigentlichen Hydrierstufe etwa gleiche Hydriergeschwindigkeiten für Kohle und mineralisches Öl zu erhalten. Als Katalysatoren werden Co-Mo, Ni-Mo, Ni-W auf $Al_2O_3$-$SiO_2$-Träger sowie billige, "verlorene" Katalysatoren genannt, ohne diese näher zu bezeichnen. Diese Veröffentlichung macht deutlich, daß die unterschiedlichen Hydriergeschwindigkeiten für Kohle einerseits und mineralische Öle andererseits eine Vorbehandlung erforderlich machen, um zu technisch brauchbaren Ergebnissen zu gelangen.

In der DE-A-3 311 552 wird ein Verfahren beschrieben, bei welchem Gemische von Kohle und mineralischen Ölen bei für Kohle-Hydrierung üblichen Bedingungen hydriert werden, nämlich bei 100 - 700 bar und 350 - 520° C. Bei diesem Verfahren können bis zu 100 Gew.-% Fremdöle als Anreiböl zugesetzt werden, wobei diese einen Siedebeginn oberhalb 200° C, vorzugsweise oberhalb 300° C haben, also zumindest teilweise im wertvollen Mitteldestillatbereich liegen. Dieses Verfahren arbeitet in der Sumpfphasenstufe im allgemeinen ohne Katalysatoren, wobei jedoch die Hinzufügung von Katalysatoren nicht ausgeschlossen sein soll. Unter welchen Umständen ein Katalysatorzusatz erfolgt und um welche Katalysatoren es sich dabei handeln soll, ist nicht offenbart.

Der Erfindung liegt die Aufgabe zugrunde, ein Verfahren der einleitend beschriebenen Art so abzuwandeln, daß eine bessere Ausbeuten bzw. weniger nicht umgesetzte Rückstände erhalten werden.

Zur Lösung dieser Aufgabe schlägt die Erfindung vor, daß in Gegenwart von Vanadium und/oder Nickel in elementarer Form und/oder in Form ihrer Verbindungen enthaltenden mineralischen Ölen und/oder Mineralölrückständen bei einer WHSV von 0,2 bis 4,0 gearbeitet wird. Hierbei tritt auf den Katalysatoren eine Dotierung an Nickel und/oder Vanadium bzw. deren Verbindungen auf, welche die hydrierende Behandlung der Kohle/Mineralölgemische begünstigt. Die eingesetzten Katalysatoren wie Eisen, Eisen enthaltende Verbindungen usw. können ggf. bereits vordotiert sein.

Die Verwendung von Vanadium und/oder Nickel als katalytisch wirksame Substanzen bei der hydrierenden Behandlung von Kohle und/oder Schweröl ist an sich bekannt. So offenbart die US-B-4,486,293 ein Verfahren zur hydrierenden Behandlung von Kohle unter Verwendung einer wasserstoffübertragenden Substanz und in Gegenwart einer Katalysatorkombination, die auch Nickel enthält. Diese Katalysatorkombination wird jedoch dem Ausgangsgemisch hinzugefügt, ist somit nicht von vornherein in einer Komponente des Ausgangsgemisches enthalten.

Demgegenüber kann beim Verfahren gemäß der Erfindung ohne zusätzlichen Aufwand ein wirksamer Katalysator verfügbar gemacht werden, wobei der Wegfall von zusätzlichem Aufwand nicht nur die Anschaffungskosten für eine katalytisch wirksame Substanz betrifft. Vielmehr hat das Verfahren gemäß der Erfindung zusätzlich den Vorteil, daß auch die Herstellung des Katalysators weder irgendwelche zusätzlichen Verfahrensschritte noch irgendeinen zusätzlichen apparativen Aufwand erfordert.

Beim Verfahren gemäß der Erfindung hat es sich als zweckmäßig herausgestellt, bei einer WHSV von 0,2 bis 3,0, bevorzugt bei einer WHSV von 0,2 bis 2,2 zu arbeiten.

Als Dotierungen können Fe, Mo, W, Ni, Co, V und/oder deren Verbindungen eingesetzt werden oder Gemische aus wenigstens zweien der genannten Metalle und/oder deren Verbindungen.

Es kann auch in Gegenwart eines Katalysators gearbeitet werden, der aus Eisensulfat und einer Base besteht oder Eisensulfat und eine Base enthält.

Ferner kann in Gegenwart eines Katalysators gearbeitet werden, der eine mit einer Alkaliverbindung behandelte Eisenverbindung, vorzugsweise Eisensulfat enthält.

Die Erfindung sieht weiterhin vor, daß in Gegenwart von Herdofenkoks gearbeitet wird. Eine andere Möglichkeit besteht darin, in Gegenwart von HTW-Staub und/oder -Asche zu arbeiten.

In die hydrierende Behandlung können Braunkohle enthaltende Gemische eingesetzt werden. Ferner können in die hydrierende Behandlung mineralische Öle mit Siedebereich $\geq 360\,^{\circ}$ C enthaltende Gemische eingesetzt werden. Geeignete Öle mineralischen Ursprungs sind Vakuumrückstände, die durch Vakuumdestillation atmosphärischer Rückstände, thermischer und katalytischer Krackrückstände oder auch von Rückständen aus dem hydrierenden Kracken erhalten werden, ferner atmosphärische Rückstände selbst sowie solche aus dem thermischen, katalytischen und Hydrokracken. Geeignete Öle sind ferner Schieferöle, Ölsandextakte, Schwerstöle, wie z. B. Orinoco-Öle, Bitumen, asphaltartige Einsatzprodukte.

Ferner sieht die Erfindung die Möglichkeit vor, daß in Abwesenheit von prozeßeigenem Anreiböl gearbeitet wird.

Bevorzugt werden 1 bis 10 Gew.% an Katalysator eingesetzt. Die Menge kann jedoch auch darüber oder darunter liegen, beispielsweise 0,5 bis 1 Gew.% bzw. 10 bis 20 Gew.%.

Die Anwendung der Katalysatoren kann in Festbett-, Fließbett-, Wirbelbett- oder Sumpfphase erfolgen. Eine bevorzugte Ausführungsform ist die Sumpfphasenhydrierung, die in einem oder in mehreren Reaktoren mit wenigstens einem nachgeschalteten Heißabscheider erfolgen kann. Die weitere Verarbeitung der Hydrierprodukte kann unter Anwendung bekannter Verfahren durchgeführt werden.

Besonders überraschend ist, daß Gemische aus Kohle und mineralischen Ölen mit Siedebereichen $\geq 500\,^{\circ}$ C ausgezeichnete Ölausbeute mit Siedebereich $< 500\,^{\circ}$ C liefern.

Als Kohletypen können sowohl Braunkohle als auch Steinkohle, Anthrazite und in gewissem Umfang torfähnliche und zellulosehaltige Materialien sowie Gemische dieser Komponenten eingesetzt werden, ferner gewisse Abfallprodukte wie Kunststoffabfälle, Industrie-Abfallchemikalien, Altöle und ähnliche Materialien.

Im allgemeinen ist die Kohlemenge im Gemisch $> 0$ bis 60 Gew.% bei einer Ölmenge $< 100$ bis 40 Gew.%. Möglich ist jedoch eine weitere Erhöhung des Kohleanteils, wenn spezielle Fördereinrichtungen, wie z. B. Förderschnecken (Extruder) verwendet werden.

Die mineralischen Öle können unterschiedlicher Herkunft sein, wie beispielsweise Arabian Heavy, Arabian Medium, Iran Heavy, Forcados, Forties, Tia Juano Pesada, Maya/Istmus oder Bachaquero.

Als Hydriergas können Wasserstoff rein oder mit Anteilen an CO, $CO_2$, $CO_4$, $CO_2H_6$, Wasserdampf, $N_2$ und anderen technischen Verunreinigungen eingesetzt werden.

Weitere Einzelheiten der Erfindung ergeben sich aus den folgenden Versuchsergebnissen:

Es wurde ein Gemisch von 30 Gew.% getrockneter Braunkohle und 70 Gew.% Vakuumrückstand aus Arabian Heavy/Medium Rohöl Siedepunkt $> 500\,^{\circ}$ C bei $458\,^{\circ}$ C und 300 bar kontinuierlich hydriert. Die WHSV (weight hourly space velocity) betrug 0,6 kg/l h. Als Katalysator wurde Herdofenkoks eingesetzt, der mit 2 Gew.% Ni ($NO_3$) und 3 Gew.% Amoniumvanadat (bezogen auf die Gewichtsmenge Herdofenkoks) dotiert war, wobei die Dotierung durch die Gehalte an Nickel- und Vanadiumverbindungen in dem eingesetzten Vakuumrückstand bewirkt wurde.

Als Vergleichsversuche wurden ausschließlich Vakuumrückstand bzw. ausschließlich Braunkohle in prozeßeigenem Anreiböl (Siedebereich $< 500\,^{\circ}$ C) eingesetzt.

Folgende Ergebnisse wurden erzielt:

| Katalysator | Einsatzprodukt | Gew.% Öl (< 500° C) |
|---|---|---|
| | Kohle/Öl | 86 |
| Herdofenkoks + Ni/V (Σ 2,5 Gew.%) | Öl | 82 |
| | Kohle | 49 |

Bei den gewonnenen Produkten handelt es sich um Öle im Siedebereich $< 500\,^{\circ}$ C (Naphtha, Mittelöl, Vakuumdestillat). Die Angaben sind in Gew.% bezogen auf den Gesamtreaktorausgang.

Aus dem Gesamtprodukt bei Einsatz von Kohle ist das Einreiböl herausgerechnet.

Die Ölausbeute mit einem Siedebereich unterhalb $500\,^{\circ}$ C des Gemisches Braunkohle/Öl ist günstiger als die Ausbeute, die sich rechnerisch aus den Ausbeuten bei Einsatz von Öl und Trockenbraunkohle jeweils allein ergibt.

Vergleicht man die Anteile an Produkten in den Siedebereichen Naphtha, Mittelöl und Vakuumdestillat (Siedebereich unter $500\,^{\circ}$ C), ist festzustellen, daß bei Einsatz von Kohle/Öl-Gemischen Mengen an den einzelnen Fraktionen erhalten werden, die den Mengen entsprechen, die bei Einsatz von mineralischem Öl allein erzielbar sind.

So werden beispielsweise bei Einsatz eines Gemisches aus Braunkohle und Vakuumrückstand aus einem Arabian Heavy Rohöl im Verhältnis 2 : 3 17,5 Gew.% Naphtha, 32,8 Gew.% Mittelöl und 49,7 Gew.% Vakuumdestillat erhalten. Im Vergleich dazu werden bei Einsatz von Vakuumrückstand allein 17,9 Gew.% Naphtha, 31,4 Gew.% Mittelöl und 50,7 Gew.% Vakuumdestillat erreicht.

## Ansprüche

1. Verfahren zur katalytischen hydrierenden Behandlung von Gemischen, die Kohle und mineralische Öle und/oder Mineralölrückstände enthalten, in Gegenwart von Wasserstoff und/oder Wasserstoff enthaltenden Gasgemischen und/oder Wasserstoff übertragenden Verbindungen bei einer Temperatur von 400 - 520°C, vorzugsweise von 430 - 500°C und einem Druck von 100 - 700 bar, vorzugsweise von 150 - 450 bar, wobei in Gegenwart von Eisen, Eisen enthaltenden Verbindungen, Eisen und/oder Eisenverbindungen enthaltenden Materialien, Herdofenknoks, HTW-Stäuben bzw. -aschen (Hoch-Temperatur-Winkler-Staub), HKV-Stäuben bzw. -aschen (hydrierende Kohlevergasung), Aktivkohlen, die dotiert sind mit wenigstens einem hydrieraktiven Metall und/oder dessen Verbindungen gearbeitet wird und Herdofenkoks, HTW-Stäube bzw. HKV-Stäube ebenfalls dotiert sein können mit wenigstens einem hydrieraktiven Metall und/oder dessen Verbindungen oder von Gemischen von wenigstens zwei der genannten Bestandteile, dadurch gekennzeichnet, daß in Gegenart von Vanadium und/oder Nickel in elementarer Form und/oder in Form ihrer Verbindungen enthaltenden mineralischen Ölen und/oder Mineralölrückständen bei einer WHSV von 0,2 - 4,0 gearbeitet wird.

2. Verfahren nach Anspruch 1, dadurch gekennzeichnet, daß bei einer WHSV von 0,2 - 3,0 gearbeitet wird und bevorzugt bei einer WHSV von 0,2 - 2,2.

3. Verfahren nach Anspruch 1, dadurch gekennzeichnet, daß als Dotierungen Fe, Mo, W, Ni, Co, V und/oder deren Verbindungen eingesetzt werden oder Gemische aus wenigstens zweien der genannten Metalle und/oder deren Verbindungen.

4. Verfahren nach Anspruch 1 oder 3, dadurch gekennzeichnet, daß in Gegenwart eines Katalysators gearbeitet wird, der aus Eisensulfat und einer Base besteht oder Eisensulfat und eine Base enthält.

5. Verfahren nach Anspruch 1 oder 3, dadurch gekennzeichnet, daß in Gegenwart eines Katalysators gearbeitet wird, der eine mit einer Alkaliverbindung behandelte Eisenverbindung, vorzugsweise Eisensulfat enthält.

6. Verfahren nach Anspruch 1, dadurch gekennzeichnet, daß in Gegenwart von Herdofenkoks gearbeitet wird.

7. Verfahren nach Anspruch 1, dadurch gekennzeichnet, daß in Gegenwart von HTW-Stäub und/oder -asche gearbeitet wird.

8. Verfahren nach Anspruch 1, dadurch gekennzeichnet, daß in die hydrierende Behandlung Braunkohle enthaltende Gemische eingesetzt werden.

9. Verfahren nach einem der Ansprüche 1 - 8, dadurch gekennzeichnet, daß in die hydrierende Behandlung mineralische Öle mit Siedebereich $\geq 360°$C enthaltende Gemische eingesetzt werden.

10. Verfahren nach einem der Ansprüche 1 - 9, dadurch gekennzeichnet, daß in die hydrierende Behandlung mineralische Öle mit Siedebereich $\geq 500°$C enthaltende Gemische eingesetzt werden.

11. Verfahren nach einem der Ansprüche 1 - 10, dadurch gekennzeichnet, daß in die hydrierende Behandlung Vakuumrückstand enthaltende Gemische eingesetzt werden.

12. Verfahren nach den Ansprüchen 1 - 11, dadurch gekennzeichnet, daß in die hydrierende Behandlung thermischen und/oder katalytischen Krackrückstand enthaltende Gemische eingesetzt werden.

13. Verfahren nach den Ansprüchen 1 - 12, dadurch gekennzeichnet, daß in die hydrierende Behandlung atmosphärischen Rückstand enthaltende Gemische eingesetzt werden.

14. Verfahren nach einem der Ansprüche 1 - 13, dadurch gekennzeichnet, daß in Abwesenheit von prozesseigenem Anreiböl gearbeitet wird.

**Claims**

1. A process for the catalytic hydrogenating treatment of mixtures which contain coal and mineral oils and/or mineral oil residues in the presence of hydrogen and/or hydrogen-containing gas mixtures and/or hydrogen-transporting compounds, at a temperature of from 400 to 520°C, preferably from 430 to 500°C, and a pressure of from 100 to 700 bars, preferably 150 to 450 bars, wherein operation is in the presence of iron, iron-containing compounds, materials containing iron and/or iron compounds, hearth furnace coke, HTW-dusts or ashes (High Temperature Winkler dust), HCG-dusts or ashes (Hydrogenating Coal Gasification), active coals which are doped with at least one hydrogenating-active metal and/or compounds thereof and hearth furnace coke, HTW-dusts or HCG-dusts can also be doped with at least one hydrogenating-active metal and/or compounds thereof or mixtures of at least two of the specified components, characterised in that operation is in the presence of mineral oils and/or mineral oil residues containing vanadium and/or nickel in elementary form and/or in the form of compounds thereof, at a WHSV of from 0.2 to 4.0.

2. A process according to claim 1 characterised in that operation is at a WHSV of from 0.2 to 3.0 and preferably a WHSV of from 0.2 to 2.2.

3. A process according to claim 1 characterised in that the doping materials used are Fe, Mo, W, Ni, Co, V and/or compounds thereof or mixtures of at least two of the specified metals and/or compounds thereof.

4. A process according to claim 1 or claim 3 characterised in that operation is in the presence of a catalyst which consists of ferrous sulphate and a base or contains ferrous sulphate and a base.

5. A process according to claim 1 or claim 3 characterised in that operation is in the presence of a catalyst which includes an iron compound which is treated with an alkaline compound, preferably ferrous sulphate.

6. A process according to claim 1 characterised in that operation is in the presence of hearth furnace coke.

7. A process according to claim 1 characterised in that operation is in the presence of HTW-dust and/or ash.

8. A process according to claim 1 characterised in that mixtures containing brown coal or lignite are used in the hydrogenating treatment.

9. A process according to one of claims 1 to 8 characterised in that mixtures containing mineral oils with a boiling range ≥ 360°C are used in the hydrogenating treatment.

10. A process according to one of claims 1 to 9 characterised in that mixtures containing mineral oils with a boiling range ≥ 500°C are used in the hydrogenating treatment.

11. A process according to one of claims 1 to 10 characterised in that mixtures containing vacuum residue are used in the hydrogenating treatment.

12. A process according to claims 1 to 11 characterised in that mixtures containing thermal and/or catalytic cracking residue are used in the hydrogenating treatment.

13. A process according to claims 1 to 12 characterised in that mixtures containing atmospheric residue are used in the hydrogenating treatment.

**14.** A process according to one of claims 1 to 13 characterised in that operation is in the absence of process-specific dilution oil.

**Revendications**

1. Procédé de traitement catalytique pour réaliser l'hydrogénation de mélanges contenant du charbon et des huiles minérales et/ou des résidus d'huiles minérales, en présence d'hydrogène et/ou de mélanges gazeux contenant de l'hydrogène et/ou des composés fournissant de l'hydrogène, à une température de 400 à 520° C et de préférence entre 430 et 500° C, sous une pression de 100 à 700 bars et de préférence entre 150 et 450 bars, cette opération s'effectuant en présence de fer, de composés contenant du fer, de matières contenant du fer et/ou des composés à base de fer, pour traiter du coke de four à sole, des poussiers ou cendres de type dit HTW (poussier de Winkler à haute température), des poussiers ou cendres de type dit HKV (résultant d'une gazéification du charbon par hydrogénation), ou des charbons actifs, que l'on a dopés avec au moins un métal qui active l'hydrogénation et/ou avec des composés de ce métal, le coke de four à sole et les poussiers de type HTW ou HKV pouvant également être dopés avec au moins un métal qui active l'hydrogénation et/ou avec des composés de ce métal, ou avec des mélanges d'au moins deux des composants indiqués, caractérisé en ce qu'on opère en présence d'huiles minérales et/ou de résidus d'huiles minérales qui contiennent du vanadium et/ou du nickel sous forme élémentaire et/ou sous forme de leurs composés, à un taux de vitesse pondérale horaire dit taux WHSV (weight hourly space velocity) compris entre 0,2 et 4,0.

2. Procédé selon la revendication 1, caractérisé en ce qu'on opère à un taux WHSV compris entre 0,2 et 3,0, ce taux WHSV étant de préférence compris entre 0,2 et 2,2.

3. Procédé selon la revendication 1, caractérisé en ce qu'on utilise comme agents de dopage les métaux suivants: Fe, Mo, W, Ni, Co, V et/ou des composés de ces métaux, ou des mélanges contenant au moins deux de ces métaux et/ou de leurs composés.

4. Procédé selon l'une des revendications 1 ou 3, caractérisé en ce qu'on opère en présence d'un catalyseur qui est constitué par du sulfate de fer et une base, ou qui contient du sulfate de fer et une base.

5. Procédé selon l'une des revendications 1 ou 3, caractérisé en ce qu'on opère en présence d'un catalyseur qui contient un composé à base de fer traité par un composé alcalin, ce composé à base de fer étant de préférence du sulfate de fer.

6. Procédé selon la revendication 1, caractérisé en ce qu'on opère en présence de coke de four à sole.

7. Procédé selon la revendication 1, caractérisé en ce qu'on opère en présence de poussier de type HTW (traitement Winkler à haute température) et/ou de cendre de même type.

8. Procédé selon la revendication 1, caractérisé en ce qu'on met en oeuvre dans le traitement d'hydrogénation des mélanges contenant du lignite.

9. Procédé selon l'une des revendications 1 à 8, caractérisé en ce qu'on met en oeuvre dans le traitement d'hydrogénation des mélanges qui contiennent des huiles minérales ayant un domaine d'ébullition ≥ 360° C.

10. Procédé selon l'une des revendications 1 à 9, caractérisé en ce qu'on met en oeuvre dans le traitement d'hydrogénation des huiles minérales ayant un domaine d'ébullition ≥ 500° C.

11. Procédé selon l'une des revendication 1 à 10, caractérisé en ce qu'on met en oeuvre dans le traitement d'hydrogénation des mélanges qui contiennent des résidus de distillation sous vide.

12. Procédé selon l'une des revendications 1 à 11, caractérisé en ce qu'on met en oeuvre dans le traitement d'hydrogénation des mélanges qui contiennent des résidus de cracking thermique et/ou catalytique.

**13.** Procédé selon l'une des revendications 1 à 12, caractérisé en ce qu'on met en oeuvre dans le traitement d'hydrogénation des mélanges qui contiennent des résidus de distillation atmosphérique.

**14.** Procédé selon l'une des revendications 1 à 13, caractérisé en ce qu'on opère sans huile de broyage particulière au traitement considéré.